# EUROPÄISCHE PATENTSCHRIFT

(11) **EP 4 296 548 B1**
(45) Veröffentlichungstag und Bekanntmachung des Hinweises auf die Patenterteilung: **25.12.2024**
(21) Anmeldenummer: 22180406.5
(22) Anmeldetag: 22.06.2022
(51) Int. Cl.: F16K 1/46

(54) **VENTILOBERTEIL**
UPPER PART OF A VALVE
PARTIE SUPÉRIEURE DE SOUPAPE

(43) Veröffentlichungstag der Anmeldung: 27.12.2023
(73) Patentinhaber: Flühs Drehtechnik GmbH, 58515 Lüdenscheid (DE)
(72) Erfinder: Roicke, Stefan, 58849 Herscheid (DE); Lange, Lutz, 58511 Lüdenscheid (DE)
(74) Vertreter: Patentanwälte Dörner & Kötter PartG mbB

(56) Entgegenhaltungen:
- EP-A2- 0 239 753
- CN-U- 209 213 028
- DE-U1- 202011 109 263
- US-A1- 2016 139 606

## Beschreibung

Die Erfindung betrifft ein Ventiloberteil nach Patentanspruch 1.

Ein derartiges Ventiloberteil ist aus der GB 2 137 736 A bekannt. Das Ventiloberteil dient der Steuerung des Austritts von Medien aus Armaturen. Zu diesem Zweck wird das Ventiloberteil mittels seines Kopfstücks in das Gehäuse einer Armatur geschraubt; auf seine Spindel wird ein Drehgriff oder Hebel befestigt. Zur Steuerung des Durchflusses ist ein Ventilstempel vorgesehen, der über die Spindel innerhalb des Kopfstücks linear bewegbar ist. Zur Abdichtung gegen den Ventilsitz nimmt der Ventilstempel eine Scheibe auf, die über eine Mutter oder einen angeformten Pilzkopf an dem Ventilstempel befestigt ist und die mit einer Bohrung versehen ist, welche eine Hinterspülung der Scheibe ermöglicht, wodurch die Scheibe sowie ein diese umgebender Dichtring gegen den Ventilsitz gepresst wird. Weiter Ventiloberteile sind in der DE 20 2011 109 263 U sowie der US 2016139606A1 beschrieben.

Nachteilig an dem vorbekannten Ventiloberteil ist, dass die Herstellung der Scheibe sowie ihre Montage sehr aufwendig ist. Das Einbringen der für die Hinterspülung erforderlichen Bohrung erfordert einen zusätzlichen Arbeitsschritt, welcher im Zuge der Massenfertigung derartiger Ventiloberteile den Prozessablauf beeinträchtigt.

Zur Behebung dieses Nachteils wird in der DE 20 2008 014 555 U1 vorgeschlagen, an Stelle der Bohrung einen Durchbruch vorzusehen, welcher derart ausgebildet ist, dass zwischen dem Aufnahmedorn und der Scheibe wenigstens eine Durchlassöffnung gebildet ist. Diese konstruktiv einfache Lösung hat sich in der Praxis bewährt. Als nachteilig hat sich gleichwohl herausgestellt, dass es in dem Zwischenraum zwischen Scheibe und Ventilkörper zu stehendem Wasser kommen kann, wodurch es zu Ablagerungen oder zu Verkeimungen kommen kann.

Hier will die Erfindung Abhilfe schaffen. Der Erfindung liegt die Aufgabe zugrunde, ein Ventiloberteil der vorgenannten Art zu schaffen, bei dem die Herstellung und Montage der Scheibe vereinfacht ist und bei dem stehendes Wasser zwischen Scheibe und Ventilkörper wirksam verhindert ist. Gemäß der Erfindung wird diese Aufgabe durch die Merkmale des kennzeichnenden Teils des Patentanspruchs 1 gelöst.

Mit der Erfindung ist ein Ventiloberteil geschaffen, bei dem die Herstellung und Montage der Scheibe vereinfacht ist und bei dem stehendes Wasser zwischen Scheibe und Ventilkörper wirksam verhindert ist. Dadurch, dass radial beabstandet zu der Bohrung in der Scheibe wenigstens zwei umlaufend beabstandet zueinander angeordnete Durchlassöffnungen angeordnet sind, ist eine Durchströmung bewirkt, wodurch stehendes Wasser vermieden ist.

In Weiterbildung der Erfindung ist an der Scheibe an ihrer dem Kopfstück zugewandten Seite ein ringförmiger Abstandhalter angeformt, der die Bohrung umgibt. Hierdurch ist ein Anlegen der Scheibe an den Ventilkörper im Zuge der Befestigung vermieden, welches eine Hinterspülung der Scheibe entgegenstände. Der Absatz ermöglicht eine durchgängige Hinterspülung der Scheibe. Vorteilhaft weist der Abstandhalter eine kegelstumpfförmig ausgebildete Außenmantelfläche auf.

In Ausgestaltung der Erfindung sind die Grundseiten der trapezförmig ausgebildeten Durchlassöffnungen kreisbogenförmig ausgebildet, wobei diese Grundseiten auf zwei gedachten konzentrisch zueinander angeordneten Kreisbögen liegen. Hierdurch ist eine Verwirbelung innerhalb des Zwischenraums zwischen Ventilkörper und Scheibe erzielt, wodurch ein kontinuierlicher Wasseraustausch unterstützt ist. Bevorzugt sind die Durchlassöffnungen identisch ausgebildet.

In weiterer Ausgestaltung der Erfindung sind die Grundseiten zweier benachbarter, trapezförmiger Durchlassöffnungen breiter als deren Abstand zueinander in Umlaufrichtung (d.h. umlaufend um den Aufnahmedorn) gesehen. Hierdurch ist die Wasserdurchströmung in dem Zwischenraum zwischen Ventilkörper und Scheibe maximiert.

In weiterer Ausgestaltung der Erfindung begrenzen zwei benachbarte Durchlassöffnungen jeweils einen im Wesentlichen rechteckförmigen Steg. Dabei sind bevorzugt durch die Durchlassöffnungen zwei konzentrische Kreisringkörper gebildet, die über vorzugsweise gleichmäßig zueinander umlaufend angeordnete Stege miteinander verbunden sind. Hierdurch ist eine verbesserte Wasserverwirbelung in dem Zwischenraum zwischen Ventilkörper und Scheibe erzielt, wodurch der Wasseraustausch weiter unterstützt ist.

In Weiterbildung der Erfindung geht der innere Kreisringkörper in das hülsenförmige Anschlussstück über, das den äußeren Kreisringkörper in die dem Ventilkörper entgegengesetzte Richtung axial überragt. Hierdurch ist eine auf den inneren Kreisringkörper gerichtete axiale Fixierung ermöglicht. Vorteilhaft geht der innere Kreisringkörper in den ringförmigen Abstandhalter über, der den äußeren Kreisringkörper in die dem Ventilkörper entgegengesetzte Richtung überragt.

In Ausgestaltung der Erfindung sind an dem hülsenförmigen Anschlussstück axiale Rippen angeordnet, die jeweils in einen der Stege übergehen. Hierdurch ist eine orthogonal zur Scheibe geleitete Wasserzufuhr zu den Durchlassöffnungen erzielt.

In weiterer Ausgestaltung der Erfindung weist der Aufnahmedorn des Ventilkörpers endseitig einen vorzugsweise kegelstumpfförmigen Rastkopf auf, dessen maximaler Außendurchmesser größer ist, als der Innendurchmesser der Bohrung der Scheibe. Hierdurch ist eine einfache, werkzeugfreie Befestigung der Scheibe an dem Ventilkörper ermöglicht. Alternativ kann der Aufnahmedorn des Ventilkörpers auch ein Außengewinde aufweisen, auf das zur axialen Fixierung der Scheibe eine Befestigungsmutter aufgeschraubt ist.

Bevorzugt ist die Scheibe aus Kunststoff hergestellt. Hierdurch ist eine kostengünstige Herstellung erzielt. Zudem erleichtert der elastische Werkstoff die Montage der Scheibe auf den Aufnahmedorn über einen Rastkopf.

Andere Ausgestaltungen und Weiterbildungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen:

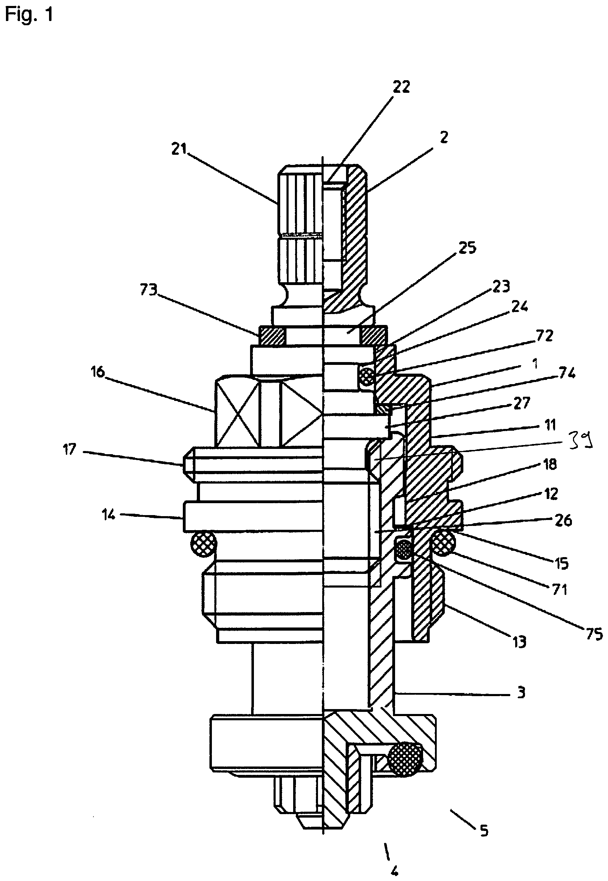

- Fig. 1: die Darstellung eines Ventiloberteils teilweise in Ansicht, teilweise im Axialschnitt;

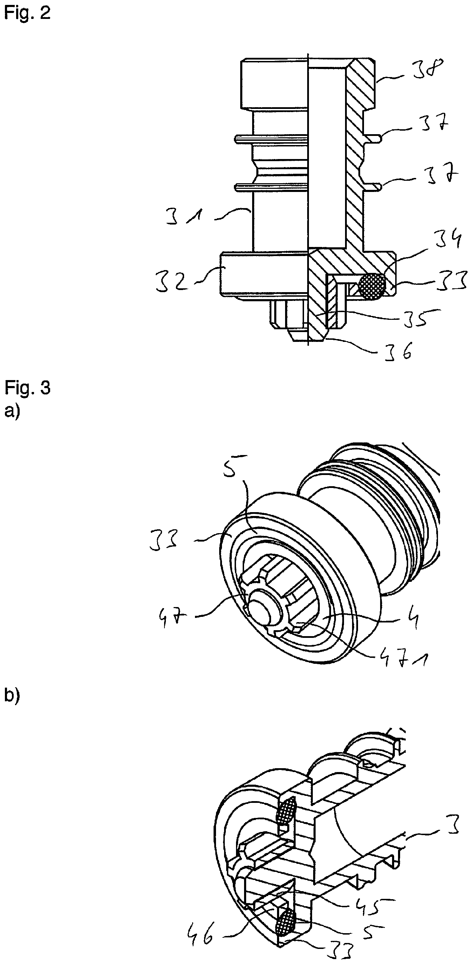

- Fig. 2: die Darstellung des Ventilkörpers des Ventiloberteils aus Figur 1 mit montierter Scheibe und Dichtring teilweise in Ansicht, teilweise im Axialschnitt;
- Fig. 3: die räumliche Darstellung des Ventilkörpers aus Figur 2
a) in einer Ansicht von unten;
b) im Längsschnitt;
- Fig. 4: die Darstellung des Ventilkörpers aus Figur 2 (ohne Scheibe und Dichtring)
a) im Längsschnitt;
b) in der Draufsicht;
- Fig. 5: die Scheibe des Ventiloberteils aus Figur 1
a) in einer räumlichen Darstellung von unten;
b) in einer räumlichen Darstellung im Längsschnitt;
c) in Teilschnittdarstellung;
d) in der Draufsicht;
- Fig. 6: die Darstellung des Ventilkörpers aus Figur 2 mit montierter Scheibe und Dichtring mit angedeutetem Ventilsitz.

Das als Ausführungsbeispiel gewählte Ventiloberteil weist ein Kopfstück 1 auf, das von einer in dieser radial geführten Spindel 2 mittig durchsetzt ist. Über die Spindel 2 ist ein Ventilkörper 3 betätigbar, der mit dem Ventilsitz 61 des Gehäuses 6 zur Anlage kommt. Der Ventilkörper 3 ist gebildet durch einen im wesentlichen zylindrischen Stempel, der eine Scheibe 4 aufnimmt, die von einem Dichtring 5 umgeben ist, wobei Scheibe 4 und Dichtring 5 mit dem Ventilsitz 61 des Gehäuses 6 zur Anlage kommen.

Das Kopfstück 1 besteht aus einem symmetrischen Hohlkörper, dessen beide Stirnflächen offen sind. Auf seiner dem Gehäuse 6 abgewandten Seite weist das Kopfstück einen hülsenartigen Teil 11 auf. An dem Teil 11 ist innen umlaufend ein Anschlag 12 zur Anlage des Ventilkörpers 3 angeformt. An seinem dem Gehäuse 6 zugewandten Ende ist das Kopfstück 1 außen mit einem Anschlussgewinde 13 versehen. Mit Hilfe des Anschlussgewindes 13 ist das Kopfstück 1 in das Gehäuse 6 der Armatur schraubbar.

Nach dem Einschrauben liegt ein Einschraubbund 14 des Kopfstücks 1 auf dem Gehäuse 6 der Armatur auf. Der Einschraubbund 14 weist auf seiner dem Anschlussgewinde 13 zugewandten Seite eine Ringnut 15 zur Aufnahme eines O-Rings 71 auf. Das Einschrauben in die Armatur erfolgt mittels eines Außenmehrkants 16, der auf der dem Anschlussgewinde 13 abgewandten Seite des Einschraubbundes 14 angeordnet ist. Dieser Teil des Kopfstücks 1 kann außen - wie dargestellt - mit einem zusätzlichen Gewinde 17 für die Aufnahme einer - nicht dargestellten - Hülse versehen sein. In Höhe des Einschraubbundes 14 und des Gewindes 17 ist der hülsenartige Teil 11 des Kopfstücks 1 innen mit einem Innensechskant 18 versehen.

Die Spindel 2 ist im Wesentlichen massiv ausgeführt. Sie ist an ihrer dem Kopfstück 1 abgewandten Seite außen als Außenvielkant 21 ausgeführt und innen mit einem Sackloch 22 mit Innengewinde für die Befestigung eines - nicht dargestellten - Drehgriffs versehen. Anschließend ist außen an der Spindel 2 eine Zylinderfläche 23 vorgesehen, mit der die Spindel 2 in dem Kopfstück 1 radial geführt ist. In der Zylinderfläche 23 ist eine Ringnut 24 zur Aufnahme eines O-Rings 72 eingebracht. Der O-Ring 72 dichtet die Spindel 2 gegen das Kopfstück 1 ab. Zwischen der Zylinderfläche 23 und dem Außenvielkant 21 ist ein Einstich 25 angeordnet, in den eine Wellensicherung 73 in Form eines Sprengrings federnd eingelegt ist. Die Wellensicherung 73 verhindert das Eindringen der Spindel 2 in das Kopfstück 1 über das vorgesehene Maß hinaus.

Die Spindel 2 ist in dem Kopfstück 1 drehbar. Auf ihrer dem Außenvielkant 21 entgegengerichteten Seite weist die Spindel 2 ein Außengewinde 26 auf. Oberhalb des Außengewindes 26 ist ein Einschraubbund 27 angeformt.

Der Ventilkörper 3 ist in Art eines zylindrischen Stempels ausgeführt. Er ist gebildet durch einen hohlzylindrischen Teil 31, an den sich ein durchmesservergrößertes Ansatzteil 32 anschließt. Das Ansatzteil 32 weist an seinem dem hohlzylindrischen Teil 31 abgewandten Ende umlaufend einen Rand 33 auf, der innen mit einem Radius 34 versehen ist. Im Zentrum des umlaufenden Randes 33 ist ein zylinderförmiger Aufnahmedorn 35 angeformt, der endseitig einen Rastkopf 36 aufweist. An seiner dem Ansatzteil 32 abgewandten Seite sind an dem hohlzylindrischen Teil 31 umlaufend beabstandet zueinander zwei Absätze 37 angeformt, welche der Aufnahme eines O-Rings 75 dienen. An seinem dem Ansatzteil 32 abgewandten Ende ist an dem hohlzylindrischen Teil 31 ein (in der Zeichnung nicht dargestellter) Außensechskant 38 angeformt. Der Außensechskant 38 korrespondiert mit dem Innensechskant 18 des Kopfstücks 1 und dient der Verdrehsicherung des Ventilkörpers 3 innerhalb des Kopfstücks 1. Innen ist der hohlzylindrische Teil 31 mit einem Innengewinde 39 versehen.

Die Scheibe 4 ist im Wesentlichen kegelstumpfförmig ausgebildet. Mittig ist in der Scheibe 4 eine Bohrung 41 eingebracht, die in den zylindrischen Durchgang eines an der Scheibe 4 angeordneten ringförmigen Abstandhalters 43 übergeht. In die Scheibe 4 sind radial beabstandet zu der Bohrung 41 umlaufend gleichmäßig beabstandet zueinander sechs identische Durchlassöffnungen 42 eingebracht. Die Durchlassöffnungen 42 sind trapezförmig ausgebildet, wobei deren Grundseiten 421 kreisbogenförmig ausgebildet sind und auf zwei gedachten konzentrisch zueinander angeordneten Kreisbögen liegen. Zwischen den Durchlassöffnungen 42 sind durch diese im Wesentlichen rechteckförmige Stege 44 begrenzt, wodurch ein innerer Kreisringkörper 45 und ein konzentrisch zu diesem angeordneter äußerer Kreisringkörper 46 gebildet sind, zwischen denen eine speichenartige Anordnung von Stegen 44 vorhanden ist.

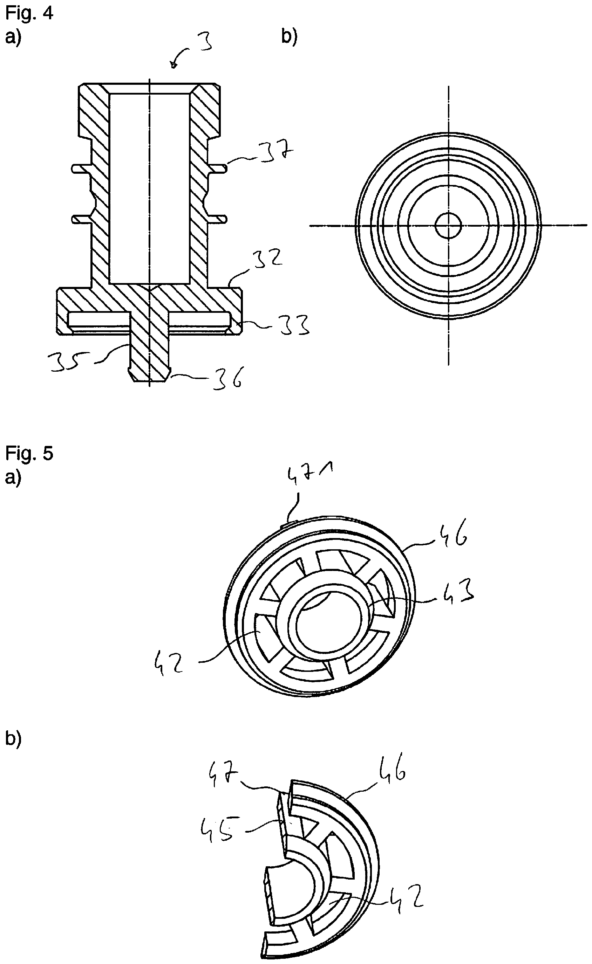

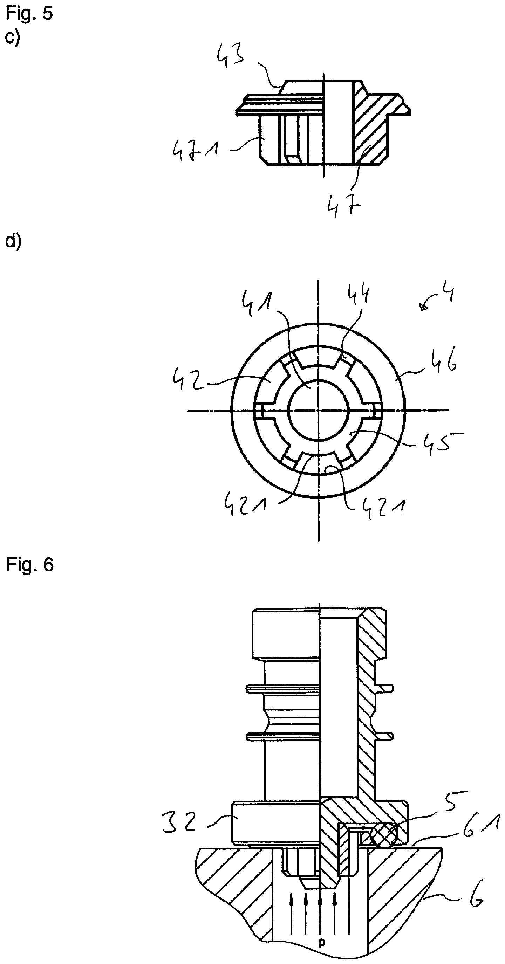

Wie insbesondere in Figur 5 b) ersichtlich ist, geht der innere Kreisringkörper 45 in ein hülsenförmiges Abschlussstück 47 über, an dem außen axiale Rippen 471 angeordnet sind, die jeweils in einen der Stege 44 übergehen. An ihrem dem äu-ßeren Kreisringkörper 46 gegenüberliegenden Ende sind die axialen Rippen 471 abgeschrägt ausgebildet.

Diese Anordnung der Durchlassöffnungen 42 mit dem an dem inneren Kreisringkörper 45, dem hülsenförmigen Abschlussstück 47 gegenüberliegend angeordneten, ringförmigen, eine kegelstumpfförmig ausgebildete Außenmantelfläche aufweisenden Abstandhalter 43 bewirkt im geschlossenen Zustand des Ventilkörpers 3, in der dieser an dem Ventilsitz 61 des Gehäuses 6 anliegt, eine gleichmäßige Wasserhinterspülung der Scheibe 4 zur Erzielung eines gleichmäßigen Dichtdrucks. In geöffneter Stellung des Ventilkörpers 3 ist durch die Anordnung der Durchlassöffnungen 42 ein kontinuierlicher Wasseraustausch bewirkt. Die Bildung von stehendem Wasser im Bereich der Dichtung 5 ist hierdurch verhindert.

Der Ventilkörper 3 ist derart in das Kopfstück 1 eingebracht, dass der Außensechskant 38 des Ventilkörpers 3 an dem Innensechskant 18 des Kopfstücks 1 anliegt, wodurch der Ventilkörper 3 in dem Kopfstück 1 verdrehsicher gehalten ist. In das Innengewinde 39 des Ventilskörpers 3 ist das Außengewinde 26 der Spindel 3 eingeschraubt, wobei die Spindel 2 über die Wellensicherungen 73, 74 innerhalb des Kopfstücks 1 axial fixiert ist. Eine Drehung der Spindel 2 bewirkt somit eine axiale Bewegung des Ventilkörpers 3 innerhalb des Kopfstücks 1. Diese axiale Bewegung des Ventilkörpers 3 ist begrenzt durch den Anschlag 12 des Kopfstücks 1, an dem in Endstellung der dem Gewinde 17 zugewandte obere Absatz 37 des Ventilkörpers 3 anliegt.

In geschlossenen Zustand des Ventiloberteils liegt in der entgegengesetzten Endstellung des Ventilkörpers 3 das Ansatzteil 32 am Ventilsitz 61 des Gehäuses 6 an. Die Funktionsweise der Dichtungsanordnung ist in Figur 6 dargestellt, wobei der Wasserdruck p durch Pfeile dargestellt ist. Das Wasser dringt, geleitet durch die an dem hülsenförmigen Anschlussstück 47 angeordneten Rippen 471, durch die Durchlassöffnungen 42 in den durch den Abstandhalter 43 der Scheibe 4 gewährleisteten Zwischenraum zwischen Ventilkörper 3 und Scheibe 4 ein und drückt seitlich radial nach außen gegen den Dichtring 5, wodurch eine Unterstützung der Dichtwirkung erzielt ist.

In geöffneter Position des Ventilkörpers 3 ist durch die - im Ausführungsbeispiel sechs - angeordneten Durchlassöffnungen 42 ein steter Wasseraustausch in dem Zwischenraum gewährleistet.

In Figur 6 ist deutlich Rastkopf 36 des Aufnahmedorns 35 des Ventilkörpers 3 ersichtlich, durch welchen die Fixierung der Scheibe 4 an dem Ventilkörper 3 bewirkt ist. Die aus Kunststoff ausgebildete, begrenzt elastische Scheibe 4 wird zur Befestigung einfach mit Ihrer Bohrung 41, deren Innendurchmesser etwas kleiner ist, als der maximale Außendurchmesser des Rastkopfes 36, über diesen auf den Aufnahmedorn 35 aufgeschoben, wonach sie durch den anschließend die Bohrung 41 überragenden Rastkopf 36 axial fixiert ist.

## Patentansprüche

1. Ventiloberteil, umfassend ein Kopfstück (1), eine Spindel (2), eine Scheibe (4), einen Ventilkörper (3) sowie eine Dichtvorrichtung, wobei das Kopfstück (1), von der Spindel (2) mittig durchsetzt ist, über die der Ventilkörper (3) betätigbar ist, der dazu geeignet ist, mit dem Ventilsitz (61) eines Gehäuses (6) zur Anlage zu kommen, wobei zwischen Ventilkörper (3) und Ventilsitz (61) die Dichtvorrichtung angeordnet ist, welche einen Dichtring (5) umfasst, der an der Scheibe (4) anliegt, welche eine Bohrung (41) aufweist, mit der sie auf einem Aufnahmedorn (35) des Ventilkörpers (3) angeordnet ist, wobei radial beabstandet zu der Bohrung (41) in der Scheibe (4) wenigstens zwei umlaufend beabstandet zueinander angeordnete Durchlassöffnungen (42) angeordnet sind, **dadurch gekennzeichnet, dass** die Scheibe (4) von dem Dichtring (5) umgeben ist, wobei nach Einschrauben des Ventiloberteils mittels seines Kopfstücks (1) in das Gehäuse einer Armatur im geschlossenen Zustand des Ventilkörpers (3), in dem er an dem Ventilsitz des Gehäuses (6) anliegt, Scheibe (4) und Dichtring (5) mit dem Ventilsitz (61) des Gehäuses (6) zur Anlage kommen.

2. Ventiloberteil nach Anspruch 1, **dadurch gekennzeichnet, dass** an der Scheibe (4) an ihrer dem Kopfstück (1) zugewandten Seite ein ringförmiger Abstandhalter (43) angeformt ist, der die Bohrung (41) umgibt.

3. Ventiloberteil nach Anspruch 1 oder 2, **dadurch gekennzeichnet, dass** an der Scheibe (4) an ihrer dem Kopfstück (1) abgewandten Seite ein hülsenförmiges Anschlussstück (47) angeordnet ist, das die Bohrung (41) umgibt.

4. Ventiloberteil nach einem der vorgenannten Ansprüche, **dadurch gekennzeichnet, dass** in der Scheibe (4) wenigstens drei Durchlassöffnungen (42) umlaufend gleichmäßig zueinander beabstandet angeordnet sind.

5. Ventiloberteil nach einem der vorgenannten Ansprüche, **dadurch gekennzeichnet, dass** zumindest zwei der Durchlassöffnungen (42) trapezförmig ausgebildet sind.

6. Ventiloberteil nach Anspruch 5, **dadurch gekennzeichnet, dass** die Grundseiten (421) der trapezförmig ausgebildeten Durchlassöffnungen (42) kreisbogenförmig ausgebildet sind, wobei diese Grundseiten (421) auf zwei gedachten konzentrisch zueinander angeordneten Kreisbögen liegen.

7. Ventiloberteil nach einem der vorgenannten Ansprüche, **dadurch gekennzeichnet, dass** die Durchlassöffnungen (42) identisch ausgebildet sind.

8. Ventiloberteil nach einem der Ansprüche 5 bis 7, **dadurch gekennzeichnet, dass** die Grundseiten (421) zweier benachbarter Durchlassöffnungen (42) breiter sind als deren Abstand zueinander in Umlaufrichtung gesehen.

9. Ventiloberteil nach einem der Ansprüche 5 bis 8, **dadurch gekennzeichnet, dass** zwei benachbarte Durchlassöffnungen (42) jeweils einen im Wesentlichen rechteckförmigen Steg (44) begrenzen.

10. Ventiloberteil nach einem der Ansprüche 6 bis 9, **dadurch gekennzeichnet, dass** durch die Durchlassöffnungen (42) zwei konzentrische Kreisringkörper (45, 46) gebildet sind, die über bevorzugt gleichmäßig zueinander umlaufend angeordnete Stege (44) miteinander verbunden sind.

11. Ventiloberteil nach Anspruch 10, **dadurch gekennzeichnet, dass** der innere Kreisringkörper (45) in das hülsenförmige Anschlussstück (47) übergeht, das den äußeren Kreisringkörper (46) in die dem Ventilkörper (3) entgegengesetzte Richtung axial überragt.

12. Ventiloberteil nach Anspruch 11, **dadurch gekennzeichnet, dass** an dem hülsenförmigen Anschlussstück (47) axiale Rippen (471) angeordnet sind, die jeweils in einen der Stege (44) übergehen.

13. Ventiloberteil nach einem der Ansprüche 10 bis 12, **dadurch gekennzeichnet, dass** der innere Kreisringkörper (45) in den ringförmigen Abstandhalter (43) übergeht, der den äußeren Kreisringkörper (46) in die dem Ventilkörper (3) entgegengesetzte Richtung überragt, wobei der ringförmige Abstandhalter (43) vorzugsweise eine kegelstumpfförmig ausgebildete Außenmantelfläche aufweist.

14. Ventiloberteil nach einem der vorgenannten Ansprüche, **dadurch gekennzeichnet, dass** der Aufnahmedorn (35) des Ventilkörpers (3) ein Außengewinde aufweist, auf das eine Befestigungsmutter aufgeschraubt ist.

15. Ventiloberteil nach einem der Ansprüche 1 bis 13, **dadurch gekennzeichnet, dass** der Aufnahmedorn (35) des Ventilkörpers (3) endseitig einen vorzugsweise kegelstumpfförmigen Rastkopf (36) aufweist, dessen maximaler Außendurchmesser größer ist, als der Innendurchmesser der Bohrung (41) der Scheibe (4).

16. Ventiloberteil nach einem der vorgenannten Ansprüche, **dadurch gekennzeichnet, dass** die Scheibe (4) aus Kunststoff hergestellt ist.

## Claims

1. Upper part of a valve comprising a head piece (1), a spindle (2), a disc (4), a valve body (3) as well as a sealing device, wherein the head piece (1) is centrally penetrated by the spindle (2), via which the valve body (3) can be actuated, which is adapted to come to rest against the valve seat (61) of a housing (6), wherein the sealing device is arranged between the valve body (3) and the valve seat (61), which comprises a sealing ring (5), which rests against the disc (4), which has a bore (41), with which it is arranged on a receiving mandrel (35) of the valve body (3), wherein at least two passage openings (42) are arranged circumferentially at a distance from one another in the disc (4) at a radial distance from the bore (1), **characterised in that** the disc (4) is surrounded by the sealing ring (5), wherein, after the upper part of the valve is screwed into the housing of a fitting by means of its head piece (1) in the closed state of the valve body (3), in which it rests against the valve seat of the housing (6), the disc (4) and the sealing ring (5) come to rest against the valve seat (61) of the housing (6).

2. Upper part of a valve according to claim 1, **characterised in that** an annular spacer (43) is moulded onto the disc (4) on its side facing the head piece (1), which surrounds the bore (41).

3. Upper part of a valve according to claim 1 or 2, **characterised in that** a sleeve-shaped connecting piece (47) is arranged on the disc (4) on its side facing away from the head piece (1), which surrounds the bore (41).

4. Upper part of a valve according to one of the previous claims, **characterised in that** at least three passage openings (42) are arranged in the disc (4) circumferentially evenly spaced apart from one another.

5. Upper part of a valve according to one of the previous claims, **characterised in that** at least two of the passage openings (42) are trapezoidal.

6. Upper part of a valve according to claim 5, **characterised in that** the base sides (421) of the trapezoidal passage openings (42) are designed in the shape of a circular arc, wherein these base sides (421) lie on two imaginary circular arcs arranged concentrically to one another.

7. Upper part of a valve according to one of the previous claims, **characterised in that** the passage openings (42) are of identical design.

8. Upper part of a valve according to one of claims 5 to 7, **characterised in that** the base sides (421) of two adjacent passage openings (42) are wider than their distance from one another as seen in the circumferential direction.

9. Upper part of a valve according to one of claims 5 to 8, **characterised in that** two adjacent passage openings (42) each delimit a substantially rectangular web (44).

10. Upper part of a valve according to one of claims 6 to 9, **characterised in that** two concentric circular ring bodies (45, 46) are formed by the two passage openings (42), which are connected to one another via webs (44) preferably arranged circumferentially evenly spaced relative to one another.

11. Upper part of a valve according to claim 10, **characterised in that** the inner circular ring body (45) merges into the sleeve-shaped connecting piece (47), which axially projects beyond the outer circular ring body (46) in the direction opposite to the valve body (3).

12. Upper part of a valve according to claim 11, **characterised in that** axial ribs (471) are arranged on the sleeve-shaped connecting piece (47), each of which merges into one of the webs (44).

13. Upper part of a valve according to one of claims 10 to 12, **characterised in that** the inner circular ring body (45) merges into the annular spacer (43), which projects beyond the outer circular ring body (46) in the direction opposite to the valve body (3), wherein the annular spacer (43) preferably has a frustoconical outer surface.

14. Upper part of a valve according to one of the previous claims, **characterised in that** the receiving mandrel (35) of the valve body (3) has an external thread, onto which a fastening nut is screwed.

15. Upper part of a valve according to one of claims 1 to 13, **characterised in that** the receiving mandrel (35) of the valve body (3) has a preferably frustoconical latching head (36) at the end, the maximum outer diameter of which is greater than the inner diameter of the bore (41) of the disc (4).

16. Upper part of a valve according to one of the previous claims, **characterised in that** the disc (4) is made of plastic.

## Revendications

1. Partie supérieure de soupape, comprenant une pièce têtière (1), une broche (2), une rondelle (4), un corps (3) de soupape ainsi qu'un dispositif d'étanchéité, sachant que la pièce têtière (1) est traversée en son centre par une broche (2) via laquelle le corps (3) de soupape est actionnable, lequel convient pour entrer en applique avec le siège (61) pour soupape d'un boîtier (6), sachant qu'entre le corps (3) de soupape et le siège (61) pour soupape est disposé le dispositif d'étanchéité, lequel comprend une bague d'étanchéité (5) en applique contre la rondelle (4), laquelle présente un alésage (41) avec lequel elle est disposée sur une pointe réceptacle (35) du corps (3) de soupape, sachant qu'à une distance radiale de l'alésage (41) sont disposés dans la rondelle (4) au moins deux orifices de passage (42) périphériques distants l'un de l'autre, **caractérisée en ce que** la rondelle (4) est entourée par la bague d'étanchéité (5), sachant qu'après avoir vissé la partie supérieure de soupape au moyen de sa pièce têtière (1) dans le boîtier d'une robinetterie lorsque le corps (3) de soupape se trouve à l'état fermé, état dans lequel il applique contre le siège pour soupape du boîtier (6), la rondelle (4) et la bague d'étanchéité (5) viennent appliquer contre le siège (61) pour soupape du boîtier (6).

2. Partie supérieure de soupape selon la revendication 1, **caractérisée en ce que** contre la rondelle (4), contre son côté regardant la pièce têtière (1), a été moulé un écarteur annulaire (43) qui entoure l'alésage (41).

3. Partie supérieure de soupape selon la revendication 1 ou 2, **caractérisée en ce que** contre la rondelle (4), contre son côté ne regardant pas la pièce têtière (1), a été moulée une pièce de raccordement (47) en forme de douille qui entoure l'alésage (41).

4. Partie supérieure de soupape selon l'une des revendications précédentes, **caractérisée en ce que** dans la rondelle (4) sont disposés au moins trois orifices de passage (42) périphériques uniformément distants les uns des autres.

5. Partie supérieure de soupape selon l'une des revendications précédentes, **caractérisée en ce qu'**au moins deux des orifices de passage (42) sont de géométrie trapézoïdale.

6. Partie supérieure de soupape selon la revendication 5, **caractérisée en ce que** les côtés de base (421) des orifices de passage (42) de géométrie trapézoïdale sont configurés en arcs de cercle, sachant que ces côtés de base (421) reposent sur deux arcs de cercle abstraits disposés réciproquement concentriques.

7. Partie supérieure de soupape selon l'une des revendications précédentes, **caractérisée en ce que** les orifices de passage (42) sont de géométrie identique.

8. Partie supérieure de soupape selon l'une des revendications 5 à 7, **caractérisée en ce que** les côtés de base (421) de deux orifices de passage (42) voisins sont plus larges que leur écart réciproque observé dans la direction circulaire.

9. Partie supérieure de soupape selon l'une des revendications 5 à 8, **caractérisée en ce que** deux orifices de passage (42) voisins délimitent chacun une nervure (44) essentiellement rectangulaire.

10. Partie supérieure de soupape selon l'une des revendications 6 à 9, **caractérisée en ce que** par les orifices de passage (42) sont formés deux corps annulaires (45, 46) concentriques reliés entre eux par des nervures (44) périphériques disposées de préférence uniformément convergentes.

11. Partie supérieure de soupape selon la revendication 10, **caractérisée en ce que** le corps annulaire (45) intérieur devient la pièce de raccordement (47) en forme de douille, pièce dans laquelle le corps annulaire (46) extérieur dépasse axialement en direction opposée du corps (3) de soupape.

12. Partie supérieure de soupape selon la revendication 11, **caractérisée en ce que** dans la pièce de raccordement (47) en forme de douille sont disposées des ailettes axiales (471) qui deviennent chacune l'une des nervures (44).

13. Partie supérieure de soupape selon l'une des revendications 10 à 12, **caractérisée en ce que** le corps annulaire (45) intérieur devient l'écarteur annulaire (43), écarteur qui dépasse du corps annulaire (46) extérieur en direction opposée du corps (3) de soupape, sachant que l'écarteur annulaire (43) présente de préférence une surface enveloppante extérieure de géométrie tronconique.

14. Partie supérieure de soupape selon l'une des revendications précédentes, **caractérisée en ce que** la pointe réceptacle (35) du corps de soupape (3) présente un filetage extérieur sur lequel est vissé un écrou de fixation.

15. Partie supérieure de soupape selon l'une des revendications 1 à 13, **caractérisée en ce que** la pointe réceptacle (35) du corps (3) de soupape présente à son extrémité une tête d'arrêt (36) de préférence tronconique, dont le diamètre extérieur maximal est supérieur au diamètre intérieur de l'alésage (41) de la rondelle (4).

16. Partie supérieure de soupape selon l'une des revendications précédentes, **caractérisée en ce que** la rondelle (4) est fabriquée en matière plastique.
